# EUROPÄISCHE PATENTSCHRIFT

(11) **EP 1 194 977 B1**
(45) Veröffentlichungstag und Bekanntmachung des Hinweises auf die Patenterteilung: **19.11.2003**
(21) Anmeldenummer: 00942051.4
(22) Anmeldetag: 10.06.2000
(51) Int. Cl.: H01M 10/34, H01M 4/24

(54) **GASDICHTE PRISMATISCHE NICKEL-METALLHYDRID-ZELLE**
GASTIGHT PRISMATIC NICKEL-METAL HYDRIDE CELL
ELEMENT NICKEL-HYDRURE METALLIQUE PARALLELEPIPEDIQUE ETANCHE AUX GAZ

(30) Priorität: 29.06.1999 DE 19929947
(43) Veröffentlichungstag der Anmeldung: 10.04.2002
(73) Patentinhaber: Deutsche Automobilgesellschaft mbH, 38112 Braunschweig (DE)
(72) Erfinder: BENCZUR-ÜRMÖSSY, Gabor, D-70199 Stuttgart (DE)
(74) Vertreter: Brückner, Ingo Andreas
(86) Internationale Anmeldenummer: EP0005377
(87) Internationale Veröffentlichungsnummer: WO01001509

(56) Entgegenhaltungen:
- EP-A- 0 416 244
- EP-A- 0 614 238
- EP-A- 0 698 937
- DE-A- 2 907 262
- US-A- 5 658 694
- PATENT ABSTRACTS OF JAPAN vol. 013, no. 343 (E-796), 2. August 1989 (1989-08-02) & JP 01 100872 A (YUASA BATTERY CO LTD), 19. April 1989 (1989-04-19)
- PATENT ABSTRACTS OF JAPAN vol. 010, no. 117 (E-400), 2. Mai 1986 (1986-05-02) & JP 60 250567 A (YUASA DENCHI KK), 11. Dezember 1985 (1985-12-11)

## Beschreibung

Die vorliegende Erfindung betrifft eine gasdichte verschlossene Nickel/Metallhydrid-Zelle für die elektrochemische Speicherung von Energie mit mindestens einer positiven Nickeloxid-Elektrode, welche ein Metalloxid aufweist und mindestens einer Wasserstoff speichernden negativen Elektrode, wobei zwischen der positiven und negativen Elektrode ein hydrophiler Separator angeordnet ist, sowie mit einem alkalischen Elektrolyten oder einer alkalischen Elektrolytmischung.

Batterien bzw. Akkumulatoren zur Aufspeicherung von elektrischer Energie in Form von chemischer Energie, die dann wieder als elektrische Energie entnommen werden kann, sind schon seit Ende des vorigen Jahrhunderts bekannt. Auch heute noch weit verbreitet ist der Bleiakkumulator. Bei ihm bestehen die Elektroden oder Platten aus dem aktiven Material, das der eigentliche Energiespeicher ist, und einem Bleiträger (Gitter), der das aktive Material aufnimmt. Daneben existieren Batterien mit alkalischen wässrigen Elektrolyten.

Alle diese galvanischen Elemente bestehen im wesentlichen aus den energiespeichernden Elektroden positiver und negativer Polarität, dem Elektrolyten, dem Separator zwischen den Elektroden, dem Zellen oder Batteriegefäß und den stromführenden, verbindenden inaktiven Teilen, wie z.B. die Zu- und Ableitungen des Stromes zu und von den Elektroden. Darunter fallen auch Trägermaterial, Stromableiterfahnen, Pole, Polbrücken, Polschrauben, Unterlegscheiben und Polverbinder. In einer gasdicht verschlossenen Nickel/Metallhydrd-Zelle sind die negativen und positiven Elektroden bspw. in einem prismatischen oder quaderförmigen Gehäuse abwechselnd nebeneinander angeordnet und durch einen Separator voneinander getrennt. Bedingt durch den normalerweise fehlenden freibeweglichen E-lektrolytüberschuss stehen die Elektroden in Kontakt zu der Zellatmosphäre, d. h. dem Gasraum der Zelle. Die beim Laden der Zelle sich entwickelnden Gase gelangen in diesen Gasraum und reagieren in Ruhephasen der Zelle an den negativen Elektroden. Dazu müssen die Gase in die Elektroden eindiffundieren. Bspw. wird der Wasserstoff wieder in das Gitter der Speicherlegierung der negativen Elektroden eingebaut, bis ein Gleichgewichtszustand erreicht ist.

Gattungsgemäße Zellen sind in der EP 0 460 424 B1, der EP 0 460 425 B1 und der DE 39 29 306 C2 beschrieben.

Problematisch bei diesen Zellen ist, daß in Ruhephasen kein Ladungsausgleich in allen negativen Elektroden der Zelle möglich ist und ein Überdruck von Wasserstoff und Sauerstoff bestehen bleibt. Um dies zu erreichen, benötigt man vielmehr Hilfselektroden oder besondere Mehrschichtelektroden.

Die EO 614 238 A1 offenbart einen gasdicht verschlossenen Nickel/Hydrid-Akkumulator mit Nickelhydroxid Anoden, einem hydrophilen Separator zwischen Anode und Kathode, einem alkalischen Elektrolyten und einer Schaummetall-Träger-Kathode, welche mit einem aktiven Material zur Wasserstoffspeicherung beschichtet ist. Diese negative Elektrode ist in zwei Teilelektroden aufgeteilt, die mit einem groben, offenporigen und gasundurchlässigen Gerüst getrennt sind. Da die meisten in der Batterietechnik eingesetzten Kunststofftransportelemente vom Elektrolyten absolut unbenetzbar sind, müssen diese extra behandelt, insbesondere hydrophiliert werden, um ein entgegengesetztes Verhalten aufzuweisen.

Die DE 289 07 262 A1 offenbart eine gasdicht verschlossene, alkalische Nickelzelle. Der Separator der Zelle ist gasundurchlässig und aufgrund von Kapillarkräften mit Elektrolyt befüllt. Die negativen Elektroden sind mit einem Gasdiffusionskörper versehen, der hochporös, grobporig und gasundurchlässig ist. Sie bestehen aus Schaummetallen, Metallsinterkörpern oder Filzen. In einer speziellen Ausführungsform entfallen auf jede positive Elektrode zwei negative Elektroden, die mit einem Gasdiffusionskörper versehen sind. Der Gasdiffusionskörper befindet sich bei den äußeren negativen Elektroden zwischen der Elektrode und der Gefäßwand.

Die EP 416 244 A1 offenbart eine gasdicht verschlossene Sekundärzelle, bei der die negative Elektrode mit einer Hilfselektrode elektrisch leitend verbunden ist. Am Rand der Zelle ergibt sich ein Elektrodenverhältnis von einer positiven zu zwei negativen Elektroden. Bei dieser Zelle wird der Gasverzehr von einer zweiteiligen, mit der Elektrode verbundenen Hilfselektrode übernommen. Hierzu ist diese Hilfselektrode dreilagig beschichtet. Das Grundgerüst ist ein hochporöses Kunststofffaservlies, welches mit zwei Lagen versehen ist. Durch die erste Schicht bekommt das hydrophobe Vlies eine hydrophile Schicht. Die dritte Schicht besteht aus einer ka-' talytisch aktiven Schicht, die aus Aktivkohle, Ruß und PTFE besteht.

Es ist daher die Aufgabe der vorliegenden Erfindung, eine Zelle der oben genannten Art bereitzustellen, bei der mit möglichst geringem Aufwand der Ladungsausgleich in den negativen Elektroden möglich ist und der Überdruck abgebaut wird.

Die Lösung besteht in einer Zelle mit den Merkmalen des Anspruchs 1. Erfindungsgemäß ist also vorgesehen, dass eine oder mehrere negative Elektroden mit einem gasdurchlässigen hydrophoben Transportelement zum Transport der Gase der Zellatmosphäre versehen sind. Ferner erlaubt die Zweiteilung mit gleichzeitiger Halbierung der Dicke der Elektroden eine Ersparnis an Volumen und Rohstoffen bei der Elektrodenherstellung, wobei die Effizienz zumindest vergleichbar bleibt.

Die Gase der Zellatmosphäre, nämlich Wasserstoff und Sauerstoff, erfüllen diese Transportelemente und erreichen die nur teilweise elektrolytgefüllten Poren in den negativen Elektroden. Der Sauerstoff wird dort schnell reduziert bzw. reagiert mit dem im Überschuss vorhandenen Wasserstoff zu Wasser. Der gasförmige Wasserstoff reagiert bis zum thermodynamischen Gleichgewicht mit der speichernden Legierung. Auf diese Weise wird in Ruhephasen ein Ladungsausgleich in allen negativen Elektroden der Zelle erreicht und der Gasdruck abgebaut wird. Die Zelle kann sogar umgepolt werden, da der nun an der positiven Elektrode sich entwickelnde Wasserstoff über die Gasphase die Transportelemente und damit die negativen Elektroden erreicht und dort oxidiert wird. Durch einen zeitlich unbegrenzt fließenden Entladestrom, z. B. bei etwa -0,2 V Zellspannung kann dieser Ablauf nachgewiesen werden.

Vorteilhafte Weiterbildungen ergeben sich aus den Unteransprüchen. Bei hochbelastbaren Zellen mit Elektrodendicken unter 0,5 mm sind bevorzugt die äußeren negativen Elektroden durch ein Transportelement flankiert. Daher verlaufen die soeben beschriebenen Ausgleichsvorgänge relativ langsam.

Bei Zellen mit dickerer Elektrode ist es von Vorteil, wenn eine oder mehrere negative Elektroden in zwei Teile geteilt sind, wobei die beiden Teile durch ein hydrophobes gasdurchlässiges Transportelement voneinander getrennt sind. Dadurch verlaufen die soeben beschriebenen Ausgleichsvorgänge relativ schnell.

Vorzugsweise ist in der Abfolge von mehreren positiven und negativen Elektroden jede zweite negative Elektrode in zwei Teile geteilt. Die beiden Teile der geteilten negativen Elektroden weisen vorteilhafterweise die halbe Dicke bzw. die halbe Kapazität der ungeteilten negativen Elektroden auf.

Das Transportelement ist bspw. eine hydrophobe Vliesschicht, vorzugsweise aus elektrolytabweisenden Polypropylenfasern.

Die positiven Elektroden sind bspw. Nickeloxidelektroden, vorzugsweise Faserstrukturgerüstelektroden, während die negativen Elektroden Wasserstoff speichernde Elektroden sind. Die Separatoren bestehen vorzugsweise aus Polyamid-Faservlies oder aus hydrophilem Polypropylen-Faservlies.

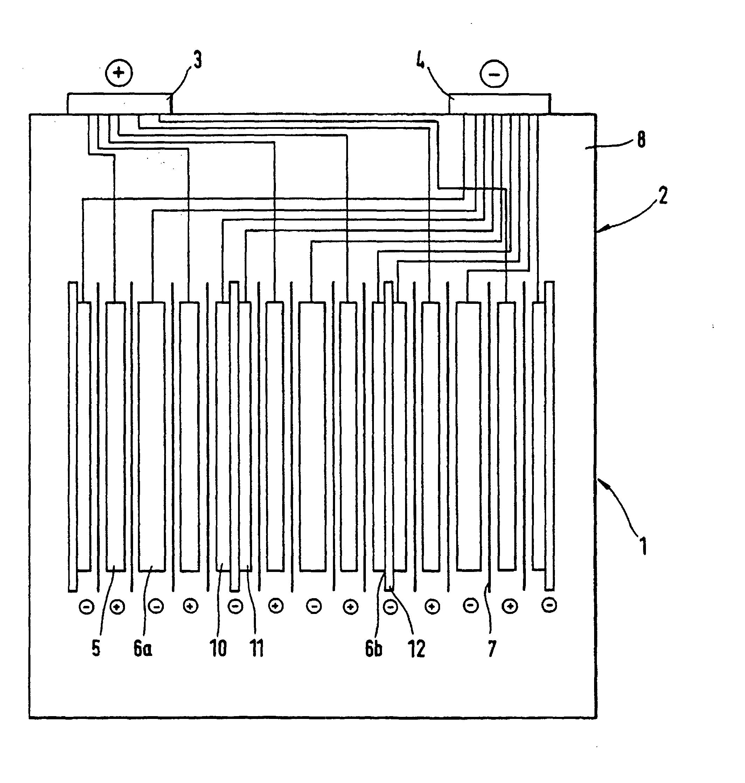

Eine bevorzugte Ausführungsform einer erfindungsgemäßen Zelle ist schematisch in Figur 1 dargestellt. Die Zelle 1 weist ein prismatisches Gehäuse 2 mit einem Pluspol 3 und einem Minuspol 4 auf. Im Gehäuse 2 befinden sich positive Nickeloxid-Elektroden 5 und negative Elektroden 6a, 6b aus einer Wasserstoffspeicherlegierung, die jeweils durch einen Separator 7 voneinander getrennt sind. Alle Elektroden stehen in Verbindung mit dem Gasraum 8. Jede zweite negative Elektrode 6 b besteht aus zwei hälftigen Teilelektroden 10, 11, welche durch ein gasdurchlässiges Transportelement 12 in Form einer hydrophoben Vliesschicht voneinander separiert sind.

Die negative Elektrode ist vorzugsweise mit einer speziell eingestellten hydrophoben/hydrophilen Balance ausgestattet.

Zu diesem Zweck ist die aktive Masse aus einer Paste erhältlich, welche aus einem Trockenanteil und einem flüssigen Anteil zusammengesetzt ist. Der Trockenanteil enthält neben einer Wasserstoff-Speicherlegierung und PTFE auch Ruß; der flüssige Anteil enthält Wasser und einen Alkohol mit 3-6 C-Atomen, wobei die Partikel der Speicherlegierung fibrillenartig mit PTFE überzogen sind.

Die Rußbeigabe ist wichtig für die Verarbeitbarkeit der Mischung. Durch die Rußbeigabe wird die Mischung pastös und gleitfähig. In der Elektrode fördert der Ruß die elektrische Kontaktierung im Mikrobereich (bis etwa 500 µm), d. h. er überbrückt die Abstände und vermittelt den elektrischen Kontakt zwischen den Öffnungen oder Poren des Trägermaterials. Diese Abstände oder Öffnungen von bis zu 500 µm Größe können von den Partikeln in der Paste bzw. der daraus erhältlichen aktiven Masse nicht überbrückt werden, da sie in der Regel einen Durchmesser von lediglich etwa 10 bis 100 µm aufweisen. Ferner sorgt der Ruß als Sauerstoffgatter für den Schutz der sauerstoffempfindlichen Speicherlegierung. Das PTFE ist verantwortlich für die hydrophoben Eigenschaften der Elektrode und ermöglicht die Einstellung der Dreiphasengrenze. In den nur teilweise benetzten Poren erfolgt die Reduktion des Sauerstoffs und die Abgabe und Aufnahme des Wasserstoffs in der arbeitenden Zelle. Das PTFE sorgt ferner für die Gleitfähigkeit und den Zusammenhalt der Paste im Misch- bzw. Formprozeß. Der Alkohol ist wiederum wichtig für die zeitweise Benetzung des PTFE-Pulvers, da sonst im Mischprozeß keine Verteilung durch Fibrillieren erfolgt.

Das Verfahren zur Herstellung der erfindungsgemäßen Elektrode ist sehr einfach. Die Komponenten werden in einem Mischer bis zur Entstehung einer zusammenhängenden Paste gemischt. Die Paste wird geformt und mit dem metallischen Trägermaterial (bspw. Streckmetall, Gewebe, Gitter Lochblech) der Elektrode vereinigt. Dabei handelt es sich um eine außerordentlich einfache Prozeßführung.

Durch die erfindungsgemäße Elektrode ist es auch nicht mehr nötig, in herkömmlichen kunststoffgebundenen Speicherelektroden eine PTFE-Dispersion mit einem hohen Gehalt an Netzmittel einzusetzen, welches durch Zersetzung bei höherer Temperatur (300°C) entfernt werden muß, was die Speicherlegierung schädigt.

Im Trockenanteil sind 85 - 95 Teile der Speicherlegierung, 2 - 10 Teile Ruß und 3 - 8 Teile PTFE enthalten. Im flüssigen Anteil sind 30 - 70 Volumenteile Wasser und 70 - 30 Volumenteile des Alkohols enthalten. Besonders gut geeignet sind dabei Alkohole mit einem Siedepunkt in der Größenordnung von etwa 100°C, also bspw. n-Butanol oder n-Propanol.

Ferner kann im flüssigen Anteil Polyethylenglykol enthalten sein. Durch die PTFE-Komponente ist die fertiggeformte Elektrode durch Lauge nur äußerst schwer benetzbar. Zur Erzielung einer ausreichenden Elektrolytaufnahme kann mit dem Ansatzwasser daher ein Polyethylenglykol zugeführt werden. Der Anteil des Polyethylenglykols beträgt 0,05 - 0,2% (bezogen auf den Trockenanteil). Vorzugsweise wird ein Polyethylenglykol mit einem Molekulargewicht zwischen 10⁵ und 5 x 10⁶ g/mol verwendet. Als Alkohol wird vorzugsweise n-Propanol oder n-Butanol verwendet. Das Verhältnis des Trockenanteils zum flüssigen Anteil beträgt je nach Rußgehalt zwischen 4:1 und 6:1 auf Massenbasis.

Die erfindungsgemäße Elektrode findet vorzugsweise Verwendung in einem alkalischen Akkumulator mit positiver Nickeloxidelektrode.

Die Herstellung der erfindungsgemäßen Elektrode erfolgt durch Walzen einer teigartigen Paste auf einen strukturierten metallischen Träger, wie etwa ein Streckmetall oder Gitternetz. Die teigartige Paste wird in einem ersten Herstellungsschritt durch einen Misch- und Knetprozeß vorgefertigt. Die festen und flüssigen Komponenten werden in einem Kneter bis zur Entstehung einer zusammenhängenden Paste gemischt, beispielsweise in einem stabilen Haushaltskneter. Die PTFE-Partikel werden dabei durch die harten Verbindungskörner fibrilliert und halten die Paste zusammen. Die Formgebung zur Elektrode erfolgt durch Handwalzen oder in einer Walzstraße. Entweder wird ein Fell erzeugt und nach Trocknung mit dem Träger vereinigt oder die Knetmasse wird direkt auf den Träger aufgetragen und anschließend getrocknet.

## Patentansprüche

1. Gasdicht verschlossene Nickel/Metallhydrid-Zelle für die elektrochemische Speicherung von Energie mit mindestens einer positiven Nickeloxid-Elektrode und mindestens einer Wasserstoff speichernden negativen Elektrode, wobei zwischen der positiven und negativen Elektrode ein hydrophiler Separator angeordnet ist, sowie mit einem alkalischen Elektrolyten oder einer alkalischen Elektrolytmischung,
**dadurch gekennzeichnet,**
**daß** in der Abfolge von mehreren positiven und negativen Elektroden jede zweite negative Elektrode in zwei Teile geteilt ist und
**daß** eine oder mehrere negative Elektroden mit einem gasdurchlässigen hydrophoben Transportelement zum Transport der Gase der Zellatmosphäre versehen sind.

2. Zelle nach Anspruch 1,
**dadurch gekennzeichnet,**
**daß** die äußeren negativen Elektroden eines Elektrodenpaketes aus n positiven und n+1 negativen Elektroden durch je ein Transportelement flankiert werden.

3. Zelle nach Anspruch 1,
**dadurch gekennzeichnet,**
**daß** eine oder mehrere negative Elektroden in zwei Teile geteilt sind, wobei die beiden Teile durch ein hydrophobes gasdurchlässiges Transportelement voneinander getrennt sind.

4. Zelle nach Anspruch 1,
**dadurch gekennzeichnet,**
**daß** die beiden Teile der geteilten negativen Elektroden die halbe Dicke bzw. die halbe Kapazität der ungeteilten negativen Elektroden aufweisen.

5. Zelle nach einem der vorhergehenden Ansprüche,
**dadurch gekennzeichnet,**
**daß** das Transportelement eine hydrophobe Vliesschicht, vorzugsweise aus elektrolytabweisenden Polypropylenfasern ist.

6. Zelle nach einem der vorhergehenden Ansprüche,
**dadurch gekennzeichnet,**
**daß** die positiven Elektroden Faserstrukturgerüstelektroden sind.

7. Zelle nach einem der vorhergehenden Ansprüche,
**dadurch gekennzeichnet,**
**daß** die Separatoren aus Polyamid-Faservlies oder aus hydrophilem Polypropylen-Faservlies bestehen.

8. Zelle nach einem der vorhergehenden Ansprüche
**dadurch gekennzeichnet,**
**daß** sie eine Elektrode mit Speichervermögen für Wasserstoff aufweist, mit einem metallischen Trägermaterial, auf welches eine aktive Masse aufgebracht ist,wobei die aktive Masse aus einer Paste erhältlich ist, die aus einem Trockenanteil und einem flüssigen Anteil besteht, wobei der Trockenanteil aus einer Mischung aus einer pulverförmigen Speicherlegierung für Wasserstoff, Ruß und Polytetrafluorethylen (PTFE) besteht, wobei die Partikel der Speicherlegierung fibrillenartig mit PTFE überzogen sind, und der flüssige Anteil aus einer Mischung aus Wasser und einem Alkohol mit 3 bis 6 C-Atomen besteht.

9. Zelle nach Anspruch 9,
**dadurch gekennzeichnet,**
**daß** im Trockenanteil 85 bis 95 Teile der Speicherlegierung für Wasserstoff, 2 bis 10 Teile Ruß und 3 bis 8 Teile PTFE enthalten sind.

10. Zelle nach einem der Ansprüche 9 bis 10,
**dadurch gekennzeichnet,**
**daß** im flüssigen Anteil 30 bis 70 Volumenteile Wasser und 70 bis 30 Volumenteile des Alkohols sowie 0,05 bis 0,2 % (bezogen auf den Trockenanteil) PEG enthalten sind.

11. Zelle nach einem der Ansprüche 9 bis 11,
**dadurch gekennzeichnet,**
**daß** im flüssigen Anteil ferner Polyethylenglycol (PEG) enthalten ist.

12. Zelle nach einem der Ansprüche 9 bis 12,
**dadurch gekennzeichnet,**
**daß** das Massen-Verhältnis des Trockenanteils zum flüssigen Anteil 4:1 bis 6:1 beträgt.

## Claims

1. Gastight sealed nickel/metal hydride cell for the electrochemical storage of energy, with at least one positive nickel oxide electrode and at least one negative electrode storing hydrogen, wherein a hydrophilic separator is arranged between the positive and negative electrode, together with an alkaline electrolyte or an alkaline electrolyte mixture,
**characterised in that**,
in the sequence of several positive and negative electrodes, every second electrode is divided into two parts,
and that one or more negative electrodes is or are provided with a gas-permeable hydrophobic transport element to transport the gases of the cell atmosphere.

2. Cell according to claim 1,
**characterised in that**
the outer negative electrodes of an electrode package of n positive and n + 1 negative electrodes are each flanked by a transport element.

3. Cell according to claim 1,
**characterised in that**
one or more negative electrodes is or are divided into two parts, wherein the two parts are separated from one another by a bydrophobic gas-permeable transport element.

4. Cell according to claim 1,
**characterised in that**
the two parts of the divided negative electrodes have half the thickness and half the capacity of the undivided negative electrodes.

5. Cell according to any of the preceding claims,
**characterised in that**
the transport element is a hydrophobic mat layer, preferably made of electrolyte-repellent polypropylene fibres.

6. Cell according to any of the preceding claims,
**characterised in that**
the positive electrodes are fibre-structured framework electrodes.

7. Cell according to any of the preceding claims,
**characterised in that**
the separators are made of polyamide fibre mat or hydrophilic polypropylene fibre mat.

8. Cell according to any of the preceding claims,
**characterised in that**
it has an electrode with storage capacity for hydrogen, with a metallic carrier material to which is applied an active material, wherein the active material is obtainable from a paste comprised of a dry component and a liquid component, wherein the dry component comprises a mixture of a powdery storage alloy for hydrogen, carbon black and polytetrafluoroethylene (PTFE), wherein the particles of the storage alloy are coated with PTFE in fibrillated form, and the liquid component is comprised of a mixture of water and an alcohol with 3 to 6 C-atoms.

9. Cell according to claim 9,
**characterised in that**
the dry component contains 85 to 95 parts of the storage alloy for hydrogen, 2 to 10 parts carbon black, and 3 to 8 parts PTFE.

10. Cell according to any of claims 9 to 10,
**characterised in that**
the liquid component contains 30 to 70 parts by volume of water and 70 to 30 parts by volume of the alcohol, together with 0.05 to 0.2% (based on the dry component) PEG.

11. Cell according to any of claims 9 to 11,
**characterised in that**
the liquid component also contains polyethylene glycol (PEG).

12. Cell according to any of claims 9 to 12,
**characterised in that**
the mass ratio between the dry component and the liquid component is 4 : 1 to 6 : 1.

## Revendications

1. Elément scellé, à base de nickel et d'hydrure métallique, étanche aux gaz, pour l'accumulation électrochimique d'énergie, comprenant au moins une électrode positive à base d'oxyde de nickel et au moins une électrode négative accumulant de l'hydrogène, un séparateur hydrophile étant disposé entre l'électrode positive et l'électrode négative, ainsi qu'un électrolyte alcalin ou un mélange d'électrolyte alcalin,
**caractérisé**
**en ce que**, dans la succession de plusieurs électrodes positives et négatives, chaque deuxième électrode négative est divisée en deux parties, et
**en ce qu'**une ou plusieurs électrodes négatives sont dotées d'un élément de transport hydrophobe et perméable aux gaz, cet élément servant au transport des gaz dans l'atmosphère de l'élément.

2. Elément selon la revendication 1, **caractérisé en ce que** les électrodes négatives extérieures d'un paquet
d'électrodes de *n* électrodes positives et de *n* + *1* électrodes négatives sont flanquées, à chaque fois, d'un élément de transport.

3. Elément selon la revendication 1, **caractérisé en ce qu'**une ou plusieurs électrodes négatives sont divisées en deux parties, les deux parties étant séparées l'une de
l'autre par un élément de transport hydrophobe et perméable aux gaz.

4. Elément selon la revendication 1, **caractérisé en ce que** les deux parties des électrodes négatives divisées présentent la demi-épaisseur ou la demi-capacité des électrodes négatives non divisées.

5. Elément selon l'une quelconque des revendications précédentes, **caractérisé en ce que** l'élément de transport est une couche d'un non-tissé hydrophobe, de préférence composée de fibres de polypropylène repoussant l'électrolyte.

6. Elément selon l'une quelconque des revendications précédentes, **caractérisé en ce que** les électrodes positives sont des électrodes à structure à base de fibres.

7. Elément selon l'une quelconque des revendications précédentes, **caractérisé en ce que** les séparateurs se composent d'un non-tissé fibreux à base de polyamide ou d'un non-tissé fibreux et hydrophile à base de polypropylène.

8. Elément selon l'une quelconque des revendications précédentes, **caractérisé en ce que** cet élément présente une électrode ayant des capacités d'accumulation d'hydrogène, une matière métallique du support, matière du support sur laquelle est appliquée une masse active, cette masse active étant obtenue à partir d'une pâte qui se compose d'une partie sèche et d'une partie liquide, la partie sèche se composant d'un mélange d'un alliage-sous forme de poudre - à accumulation d'hydrogène, de noir de carbone et de polytétrafluoroéthylène (PTFE), les particules de l'alliage à accumulation, sous forme de fibrilles, étant recouvertes de polytétrafluoroéthylène (PTFE), la partie liquide se composant d'un mélange constitué d'eau et d'un alcool comportant entre 3 et 6 atomes de carbone (C).

9. Elément selon la revendication 8, **caractérisé en ce que** des quantités de 85 à 95 parties en poids de l'alliage à accumulation d'hydrogène, de 2 à 10 parties en poids de noir de carbone et de 3 à 8 parties en poids de polytétrafluoroéthylène (PTFE) sont contenues dans la partie sèche.

10. Elément selon la revendication 8 ou 9, **caractérisé en ce que** des quantités de 30 à 70 parties en volume d'eau et de 70 à 30 parties en volume d'alcool, ainsi qu'une quantité variant entre 0,05 % et 0,2 % de polyéthylène glycol (PEG) (par rapport à la partie sèche), sont contenues dans la partie liquide.

11. Elément selon l'une quelconque des revendications 8 à 10, **caractérisé en ce que** du polyéthylène glycol (PEG) est contenu en outre dans la partie liquide.

12. Elément selon l'une quelconque des revendications 8 à 11, **caractérisé en ce que** le rapport de masse existant entre la partie sèche et la partie liquide est égal à une valeur comprise entre 4 : 1 et 6 : 1.
